# EUROPÄISCHE PATENTANMELDUNG

(11) **EP 4 604 339 A1**
(43) Veröffentlichungstag der Anmeldung: **20.08.2025**
(21) Anmeldenummer: 25152315.5
(22) Anmeldetag: 16.01.2025
(51) Int. Cl.: H02G 11/00

(54) **KABELFÜHRUNGSSYSTEM**

(30) Priorität: 19.02.2024 DE 102024104481
(71) Anmelder: Stemmann-Technik GmbH, 48465 Schüttorf (DE)
(72) Erfinder: Holke, Dirk, 48455 Bad Bentheim (DE); Brinker, Martin, 49716 Meppen (DE)
(74) Vertreter: Griepenstroh, Jörg

(57) **Zusammenfassung**

Die Erfindung betrifft ein Kabelführungssystem 1 zum Laden eines Elektrofahrzeugs umfassend ein Ladekabel 2 mit einem endseitigen Ladestecker 3, wobei das Ladekabel 2 in seinem Verlauf von einem Anschlussende zu seinem Ende mit dem Ladestecker 3 in einer Führungseinrichtung 4 U-förmig umgelenkt geführt wird, so dass das U-förmig verlaufende Ladekabel 2 zwei nebeneinander oder übereinander verlaufende Schenkel 8, 9 aufweist, wobei das den Ladestecker 3 tragende Ende des Ladekabels 2 in einer ortsfesten Vertikalumlenkstation 11 nach unten umgelenkt wird, so dass der Ladestecker 3 hängend unterhalb der Vertikalumlenkstation 11 angeordnet ist, wobei die Führungseinrichtung 4 eine Umlenkeinheit 16 zur U-förmigen Umlenkung aufweist, die in eine Längsrichtung der Führungseinrichtung 4 verlagerbar ist und wobei das Ladekabel 2 von mehreren Kabelträgern 24 zwischen seinem Anschlussende und der Umlenkeinheit 16 sowie zwischen der Umlenkeinheit 16 und der Vertikalumlenkstation 11 getragen und geführt wird.

## Beschreibung

Die Erfindung betrifft ein Kabelführungssystem mit den Merkmalen im Patentanspruch 1.

Ladekabel für Elektrofahrzeuge sollen davor geschützt werden, von einem Fahrzeug überfahren zu werden. Die Kontakte des Ladesteckers sollen keiner Nässe ausgesetzt sein. Zudem soll der Ladestecker gut erreichbar sein, leicht in der Handhabung sein und bei Nichtgebrauch sicher, einfach und platzsparend in eine Ausgangsposition gebracht werden können.

Der Erfindung liegt die Aufgabe zugrunde, ein Kabelführungssystem aufzuzeigen, das die vorstehend genannten Eigenschaften aufweist.

Die Erfindung löst diese Aufgabe durch ein Kabelführungssystem mit den Merkmalen des Patentanspruches 1.

Die Unteransprüche betreffen vorteilhafte Weiterbildungen der Erfindung.

Das erfindungsgemäße Kabelführungssystem dient zum Laden eines Elektrofahrzeuges und umfasst ein Ladekabel mit einem endseitigen Ladestecker, wobei das Ladekabel in seinem Verlauf von einem Anschlussende zu seinem Ende mit dem Ladestecker in einer Führungseinrichtung horizontal U-förmig umgelenkt geführt wird. Das U-förmig verlaufende Ladekabel weist zwei horizontal nebeneinander oder vertikal übereinander verlaufende Schenkel auf, die sich an einen Umlenkbereich des Ladekabels anschließen. Das den Ladesteckertragende Ende des Ladekabels wird in einer ortsfesten Vertikalumlenkstation nach unten umgelenkt, so dass der Ladestecker hängend unterhalb der Vertikalumlenkstation angeordnet ist. Bei dem erfindungsgemäßen Kabelführungssystem handelt es sich um eine hängende Anordnung, beispielsweise unter einer Decke oder einer deckenseitigen Tragkonstruktion. Das erfindungsgemäße Kabelführungssystem ist je nach Orientierung der nebeneinander verlaufenden Schenkel des Ladekabels entweder in der Breite oder in der Höhe besonders platzsparend. Bei horizontal nebeneinander verlaufenden Schenkeln erfordert es nur eine minimale Bauhöhe. Bei vertikal übereinander verlaufenden Schenkeln erfordert es nur eine minimale Breite. Die Umlenkung des Ladekabels erfolgt mittels einer Umlenkeinheit. Die Umlenkeinheit ist in Längsrichtung der Führungseinrichtung verlagerbar. Zwischen der Umlenkeinheit und der Vertikalumlenkstation bzw. zwischen der Umlenkeinheit und dem Anschlussende wird das Ladekabel jeweils von mehreren Kabelträgern getragen, die an der Führungseinrichtung befestigt sind.

Das erfindungsgemäße Kabelführungssystem mit der deckenseitigen Anordnung lässt einen unbeschränkten Bewegungsraum für alle flurseitigen Elektrofahrzeuge zu. Der Ladestecker kann in einer Höhe aufgehängt werden, in welcher jegliche Kollision mit dem Elektrofahrzeug ausgeschlossen ist. Der Ladestecker soll durch die Bewegung der Umlenkeinheit bewegt werden. Er wird automatisch bewegt, wenn die Umlenkeinheit aktiv verschoben wird.

Die Vertikalumlenkstation ist bei dem erfindungsgemäßen Kabelführungssystem ortsfest, d.h. das Ladekabel kann nur an dieser einen Stelle vertikal nach unten bewegt werden. Allerdings kann durch den U-förmigen Verlauf des Ladekabels ein sehr langes Ladekabel zum Einsatz kommen, bei vergleichsweise geringem Aufwand für das Kabelführungssystem. Die U-förmige Anordnung mit zwei parallelen Schenkeln des Ladekabels halbiert den Platzbedarf im Vergleich zur gestreckten Länge des Ladekabels. Je größer der Querschnitt des Ladekabels ist, desto größer muss auch der Durchmesser der Umlenkeinheit sein.

In einer vorteilhaften Weiterbildung der Erfindung besitzt das Kabelführungssystem zwei horizontale und parallel nebeneinander oder alternativ zwei horizontale und vertikal übereinander angeordnete Führungsschienen, in denen jeweils Kabelträger verschiebbar geführt werden, um das Ladekabel parallel zu den Führungsschienen zu tragen. Jedem der Schenkel des Ladekabels ist mithin eine Führungsschiene zugeordnet. Die Kabelträger des einen Schenkels sind unabhängig von dem Kabelträger des anderen Schenkels bewegbar. Insgesamt soll eine Parallelführung der Schenkel durch die Führungsschienen und Kabelträger gewährleistet werden.

Gemäß einer weiteren Ausbildung der Erfindung ist eine Antriebsschiene zwischen den Führungsschienen für die Schenkel des U-förmig umgelenkten Ladekabels angeordnet. Die Antriebsschiene dient dazu, einen Mitnehmer in der Antriebsschiene zu führen, wobei der Mitnehmer die Umlenkeinheit hält und führt. Die Umlenkeinheit muss ihre Position aufgrund der ortsfesten Vertikalumlenkstation zwangsläufig verändern, wenn der Ladestecker abgesenkt werden soll. Die Lageveränderung erfolgt über den Mitnehmer in der Antriebsschiene. Der Mitnehmer ist ein Führungsschlitten, der in der Antriebsschiene gelagert und mit einem Linearantriebssystem verbunden ist. Das Linearantriebsystem kann einen Zugmitteltrieb aufweisen, bei dem das Zugmittel (Riemen, Kette) in der Antriebsschiene angeordnet ist. Ein Mitnehmerantrieb ist endseitig der Antriebschiene angeordnet. Der Mitnehmerantrieb, die Antriebschiene mit dem Zugmitteltrieb und mit dem Mitnehmer sowie einer Steuerung für die Mitnehmerantrieb bilden das Linearantriebsystem.

Die Umlenkeinheit dient dazu, den U-förmigen Bogen des Ladekabels auszubilden. Vorzugsweise wird die Umlenkeinheit auch an wenigstens einer Führungsschiene für die Schenkel des U-förmig umgelenkten Ladekabels gehalten und dementsprechend in Längsrichtung geführt und verlagert. Auch der U-förmige Bogen, d.h. der Umlenkbereich verläuft vorzugsweise in derselben Ebene wie die beiden Schenkel des umgelenkten Ladekabels. Zum Umlenken besitzt die Umlenkeinheit vorzugsweise mehrere Rollendurchführungen. Die Rollendurchführungen sind bogenförmig angeordnet, beispielsweise in einem Winkelabstand von 45° und beschreiben einen bogenförmigen Umlenkpfad. Die Umlenkeinheit besitzt hierzu einen Rahmen, an dem die Rollendurchführungen befestigt sind. Der Rahmen kann insbesondere ebenfalls bogenförmigen sein. Vorzugsweise erstreckt sich dieser Rahmen über 180°. Der Rahmen kann von einer bogenförmigen Tragplatte gebildet sein. Die Enden der Tragplatte bzw. des Rahmens können an den Führungsschienen für die Schenkel des umgelenkten Ladekabels befestigt sein, während die Mitte der Tragplatte an der zentralen Führungsschiene geführt und gehalten wird. Diese Dreipunktlagerung verhindert ein Verkanten und ermöglicht eine exakte Parallelführung der Umlenkeinheit entlang der Führungsschienen.

Die Umlenkung kann alternativ auch über Gleitlagersysteme erfolgen oder eine Kombination aus Gleitlagern und Rollendurchführungen sein.

Alle Führungsschienen sind vorzugsweise über eine Tragstruktur miteinander verbunden. Hierbei kann es sich um einzelne, im Abstand zueinander angeordnete Querstreben handeln, die an einer Decke oder an einer tragenden Struktur befestigt sind. In vorteilhafter Weise ist auch die Vertikalumlenkstation an einer der Führungsschienen fixiert. Dadurch wird auch die Vertikalumlenkstation über die Tragstruktur gehalten. Das erfindungsgemäße Kabelführungssystem besitzt mit der vorhandenen Gebäudestruktur nur relativ wenige Verbindungspunkte und ist damit einfach montierbar und nachrüstbar.

Gemäß einer vorteilhaften Weiterbildung der Erfindung besitzt auch die Vertikalumlenkstation eine Rollendurchführung zwischen ihrem horizontal offenen Eintrittsende für das Ladekabel und ihrem nach unten offenen Austrittsende für das Ladekabel. Das Austrittsende ist vorzugsweise vertikal nach unten gerichtet und führt zum Ende, das den Ladestecker trägt. Innerhalb der vertikalen Umlenkstation können eine oder mehrere Rollendurchführungen ebenfalls in bogenförmiger Anordnung angeordnet sein und den Reibungswiderstand beim Absenken des Ladesteckers zu minimieren. Alternativ oder ergänzend zu einer Rollendurchführung kann ein Gleitlagersystem zur Umlenkung vorgesehen sein.

Das Kabelführungssystem ist dazu ausgebildet, den Ladestecker automatisiert absenken und anheben zu können. Bei Nichtgebrauch des Ladesteckers kann dieser in einer vorgegebenen Ausgangsposition angeordnet sein. Hierbei handelt es sich insbesondere um eine angehobene Position, so dass ein zu ladendes Fahrzeug beim Rangieren nicht mit dem Ladestecker kollidiert. Zum Anheben des Ladesteckers bei Nichtgebrauch wird die Umlenkeinheit so verlagert, dass der Abstand zur Vertikalumlenkeinheit vergrößert wird, so dass das Ladekabel eingezogen wird. Das Verlagern der Umlenkeinheit erfolgt über den Mitnehmer, der linear entlang der Antriebsschiene verlagert wird. Der Mitnehmer wird über den Mitnehmerantrieb verschoben, vergleichbar mit einem deckenseitigen Garagentorantrieb für Sektionaltore. Über diesen Mitnehmerantrieb kann das Ladekabel mit dem Ladestecker auch wieder herabgelassen werden. Es handelt sich mithin um ein Kabelführungssystem mit einem elektromotorischen Antrieb zum Anheben und Absenken des Ladesteckers.

Das beschriebene System kann von einer Federkraft unterstützt werden. Beim Einfahren des Ladesteckers kann eine Federkraft aufgebaut werden, indem eine Feder durch die Bewegung des Kabelführungssystems gespannt wird. Wenn der Ladestecker wieder abgesenkt werden soll, wirkt die aufgebaute Federkraft in Richtung des Ladesteckers und drückt ihn nach unten. Nachdem die zuvor aufgebaute Federkraft wieder abgebaut wurde, z.B. indem eine Feder entspannt wurde, reicht die Gewichtskraft des Ladekabels und des Steckers aus, um den Ladestecker weiter nach unten zu verlagern. Er wird durch seine Gewichtskraft bewegt, also gezogen und nicht geschoben. Das führt zu einer Entlastung der Umlenkeinheit und des Linearantriebsystems.

Die Feder kann als Schraubenfeder ausgebildet sein und das Ladekabel umgeben. Sie schützt das Ladekabel vor Knicken. Sie kann zwischen einer Unterseite der Vertikalumlenkeinheit einer Oberseite des Ladesteckers wirksam sein, bzw. sich an entsprechen Anlageflächen abstützen. Die Wirkung der Feder ist stets, den Ladestecker beim Absenken zu unterstützen. Es muss die Reibung und Verformungsarbeit des Ladekabels innerhalb der Führungseinrichtung überwunden werden. Es sind Rollwiderstände im Bereich der Führungsschienen und der Rollendurchführung zu überwinden. Darüber hinaus muss das Ladekabel im Bereich der Umlenkeinheit gebogen werden. Zudem findet eine Relativbewegung zwischen den Kabelträgern und dem Ladekabel statt. Hierzu besitzen die Kabelträger in vorteilhafter Weise Gleithülsen, durch welche das Ladekabel geführt ist. Die Gleithülsen besitzen vorzugsweise einen geringen Reibungswiderstand, so dass die Feder nur eine geringe Kraft erzeugen muss, um den Ladestecker aus der Ausgangsposition heraus zu verlagern. Das bedeutet gleichzeitig, dass der Ladestecker auch mit relativ geringer Kraft wieder nach oben gezogen werden kann.

Die Kabelträger müssen nicht zwangsläufig Gleithülsen aufweisen. Es soll eine Führung mit geringem Widerstand ermöglicht werden. Beispielsweise können Rollenfenster an den Kabelträgern verwendet werden.

Das erfindungsgemäße Kabelführungssystem sieht vor, dass die Schenkel des Ladekabels stets im Wesentlichen parallel zu den Führungsschienen angeordnet und frei von nach unten hängenden Schlaufen sind. Dadurch wird eine geringe Bauhöhe sichergestellt. Die Kabelträger sind in definierten Abständen an den Führungsschienen positioniert. Sie können über Schleppelemente miteinander verbunden sein. Die Schleppelemente stellen eine Verbindung zwischen den Kabelträgern her und stellen sicher, dass der Abstand nicht zu groß wird. Die Schleppelemente lassen zu, dass der Abstand zwischen den Kabelträgern verkleinert werden kann. Sofern Gleithülsen statt Rollenfenster zum Einsatz kommen, besitzen diese eine gewisse Länge in Längsrichtung der Ladekabel, so dass es innerhalb der Gleithülsen zu einer Linienberührung und nicht zu einer sehr schmalen Punktberührung kommt. Die Gleithülsen sollen aufgrund ihrer Länge sicherstellen, dass das Ladekabel möglichst wenig dazu neigt, Schlaufen zu bilden.

Sofern im Rahmen der Erfindung davon die Rede ist, dass die Schenkel des Ladekabels stets im Wesentlichen parallel zu den Führungsschienen angeordnet sind, berücksichtigt der Ausdruck "im Wesentlichen parallel", dass aufgrund des zwangsläufig vorhandenen Spiels des Ladekabels innerhalb der Gleithülsen sowie aufgrund von Temperaturunterschieden und Verschleiß sowie aufgrund von Ermüdungserscheinungen des Materials, eine vollkommen parallele Führung der Ladekabel technisch nicht möglich ist, allerdings funktional betrachtet die Ladekabel stets nur wenig schwerkraftbedingte Durchbiegung nach unten haben sollen, also keine Schlaufen bilden.

Die Erfindung wird nachfolgend anhand von in den schematischen Zeichnungen dargestellten Ausführungsbeispielen näher erläutert. Es zeigen:
- Figur 1: eine perspektivische Ansicht eines Kabelführungssystem von schräg oben;
- Figur 2: eine perspektivische Darstellung des Kabelführungssystems der Figur 2, ebenfalls von schräg oben;
- Figur 3: eine Ansicht von vertikal oben auf das Kabelführungssystem der Figuren 1 und 2;
- Figur 4: eine Ansicht von unten auf das Kabelführungssystem der vorhergehenden Figuren;
- Figur 5: eine Seitenansicht auf das Kabelführungssystem der Figuren 1 bis 4;
- Figur 6: eine weitere Seitenansicht auf das Kabelführungssystem der Figuren 1 bis 5;
- Figur 7: eine perspektivische Ansicht von schräg unten auf die Umlenkeinheit des Kabelführungssystems der Figuren 1 bis 6;
- Figur 8: in perspektivischer Ansicht einen Kabelträger des Kabelführungssystems;
- Figur 9: eine perspektivische Darstellung einer Vertikalumlenkstation;
- Figur 10: eine vereinfachte Darstellung eines Kalbeführungssystems gemäß einer zweiten Ausführungsform.

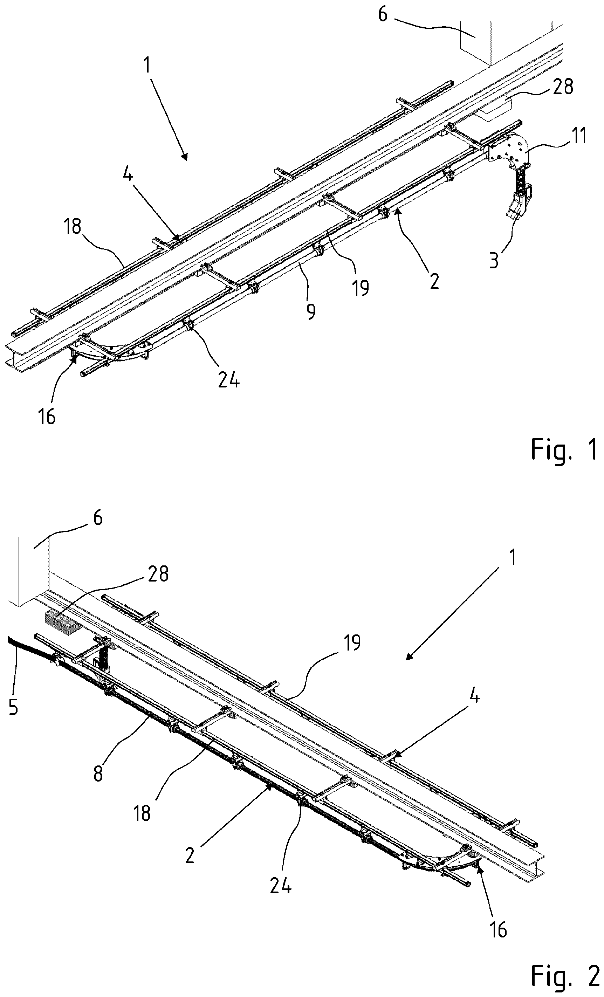

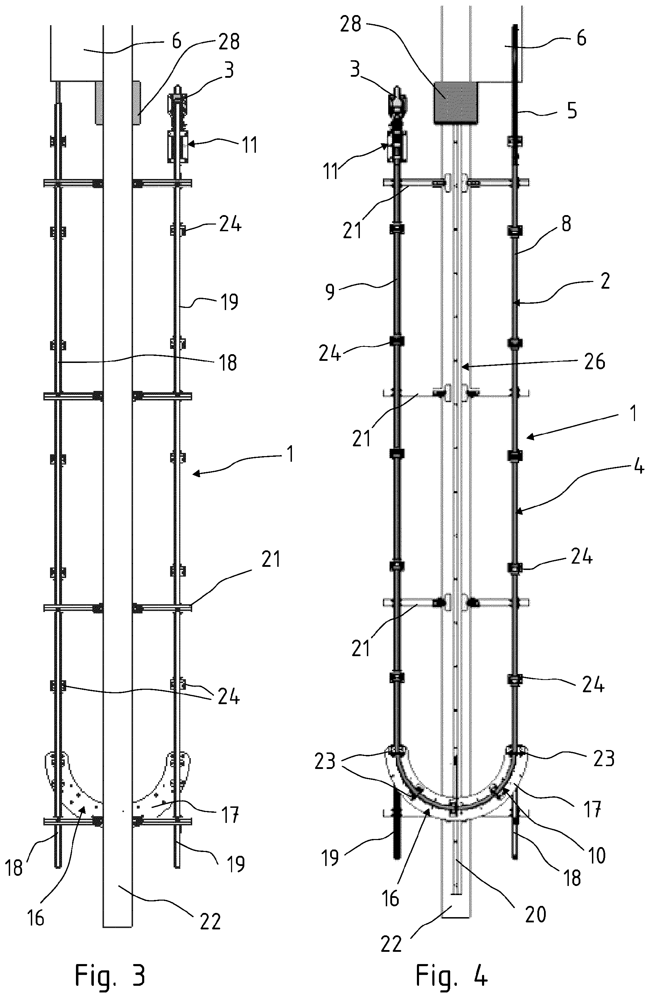

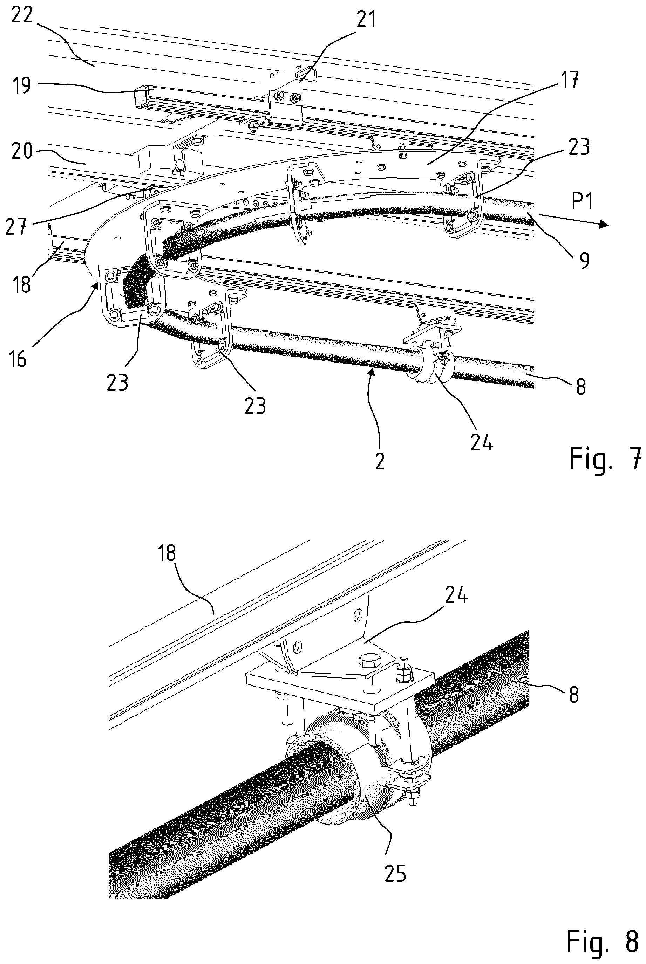

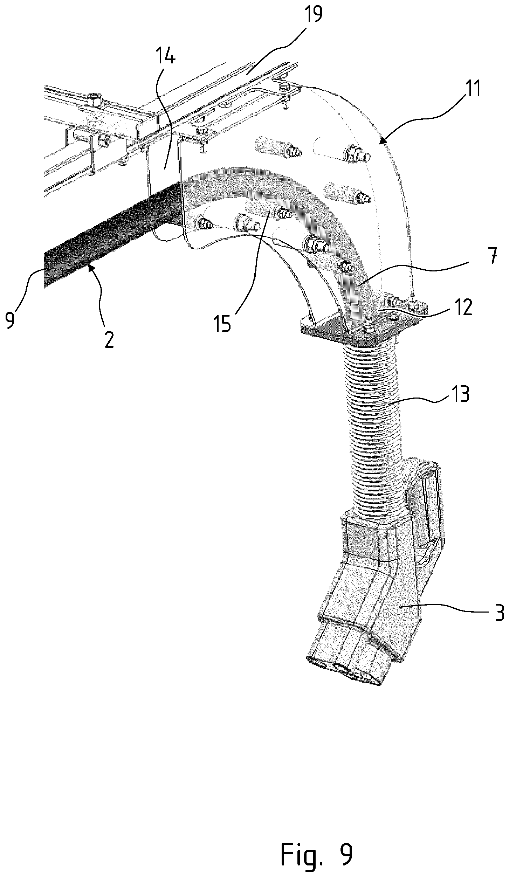

Die Figuren 1 bis 9 beziehen sich alle auf dasselbe Ausführungsbeispiel eines Kabelführungssystems mit horizontal nebeneinander angeordneten Schenkeln, wobei das Ausführungsbeispiel in den Figuren 1 und 2 aus zwei Perspektiven von schräg oben und in den Figuren 3 bis 6 jeweils von senkrecht oben und unten bzw. von der linken und rechten Seite gezeigt ist. Die Figuren 7 bis 9 zeigen Details in perspektivischer Ansicht.

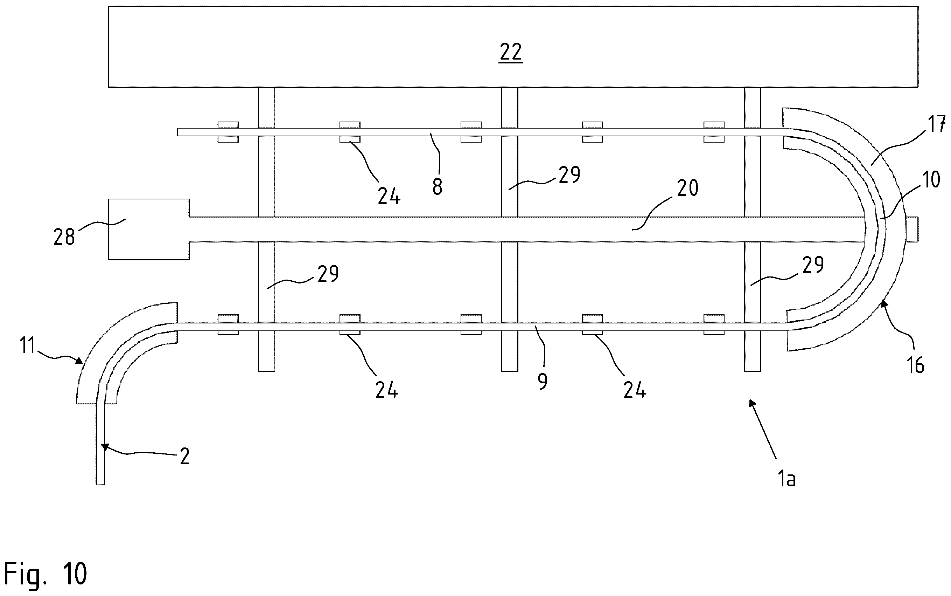

Die Figur 10 zeigt eine Prinzipskizze eines zweites Ausführungsbeispiel eines Kabelführungssystems mit vertikal übereinander angeordneten Schenkeln, wobei die zum Ausführungsbeispiel der Figuren 1 bis 9 eingeführten Bezugszeichen auch für funktionsgleiche Komponenten des zweiten Ausführungsbeispiels verwendet werden.

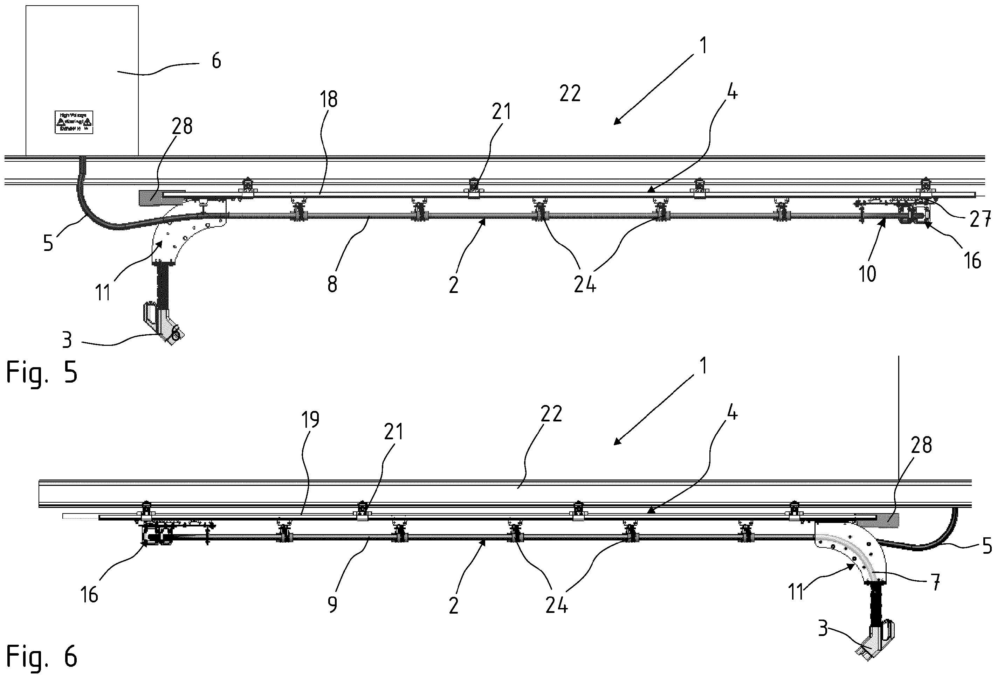

Das Kabelführungssystem 1 dient zum Laden eines Elektrofahrzeuges (nicht näher dargestellt) und umfasst ein Ladekabel 2 mit einem endseitigen Ladestecker 3. Das Ladekabel 2 ist U-förmig an einer Führungseinrichtung 4 gehalten. Die Führungseinrichtung 4 unterstützt das Ladekabel 2 in seinem Längsverlauf von einem Anschlussende 5 an einer ortsfesten Versorgungsstation 6 (Figur 5) bis zu dem Ende 7 des Ladekabels 2, an dem der Ladestecker 3 befestigt ist.

Anhand der Darstellungen 5 und 6 ist zu erkennen, dass die beiden an den U-förmigen Umlenkbereich 10 des Ladekabels angeschlossenen parallelen Schenkel 8, 9 des Ladekabels horizontal nebeneinander angeordnet sind. Auch der U-förmige Umlenkbereich 10 des Ladekabels befindet sich in derselben horizontalen Ebene wie die sich beiderseits anschließenden Schenkel 8, 9 des Ladekabels 2.

Das gesamte Kabelführungssystem 1 und insbesondere die Führungseinrichtung 4 sind hängend angeordnet, so dass das Ladekabel 2 von oben kommend heruntergelassen werden kann, indem der nach unten hängende Ladestecker 3 nach unten verlagert wird. Hierzu befindet sich das Ende 7 des Ladekabels 2 in einer ortsfesten Vertikalumlenkstation 11. Das Ladekabel 2 wird in der besagten Horizontalebene in die Vertikalumlenkstation 11 eingeführt und vertikal nach unten, d.h. nach einer Umlenkung um 90° aus der Vertikalumlenkstation 11 aus dieser herausgeführt.

Die Figuren 5, 6 und 9 zeigen, dass der Ladestecker 3 in einem vertikalen Abstand zur Vertikalumlenkstation 11 angeordnet ist. Zwischen einem nach unten offenen Austrittsende 12 der Vertikalumlenkstation 11 für das Ladekabel 2 und dem Ladestecker 3 befindet sich eine Feder 13. Sie ist als Druckfeder konfiguriert, um den Ladestecker 3 nach unten zu drücken. Die Feder 13 umgibt das Ladekabel 2. Beim Absenken des Ladesteckers 3 wird das Ladekabel 2 über ein horizontal offenes Eintrittsende 14 der Vertikalumlenkstation 11 in die Vertikalumlenkstation 11 gedrückt, wobei es über eine Rollendurchführung 15 der Vertikalumlenkstation 11 mit möglichst geringem Widerstand zum Austrittsende 12 geführt wird. Dabei wird die Feder 13 entspannt. Wenn die Feder 13 beim Absenken des Ladesteckers 2 wieder vollkommen entspannt ist, ist die Gewichtskraft des nach unten hängenden steckerseitigen Endes 7 des Ladekabels 2 und die des Ladesteckers 3 für das weitere Absenken groß genug. Auf eine Unterstützung durch Federkraft kann in der 2. Phase des Absenkens verzichtet werden.

Das Kabelführungssystem umfasst eine Umlenkeinheit 16. Sie ist bogenförmig konfiguriert und erstreckt sich von Schenkel 8 zu Schenkel 9 des Ladekabels 2. Aus der perspektivischen Darstellung der Figur 7 ist zu erkennen, dass die Umlenkeinheit 16 eine bogenförmige Tragplatte 17 aufweist, an deren Unterseite mehrere Rollendurchführungen 23 angeordnet sind. Bei diesem Ausführungsbeispiel sind insgesamt fünf Rollendurchführungen 23 über einen Winkelbereich von 180° verteilt angeordnet. Zwischen zwei Rollendurchführungen 23 beträgt der eingeschlossene Winkel jeweils 45°. Die Rollendurchführungen 23 besitzen jeweils auf drei Seiten Führungsrollen für das Ladekabel 2 und bestimmen so den Umlenkbereich 10 des Ladekabels 2.

Die Umlenkeinheit 16 ist dafür vorgesehen, eine Umlenkkraft auf das Ladekabel 2 auszuüben. Die Umlenkeinheit 16 wird zu diesem Zweck über ein Linearantriebssystem 26 in Richtung zur Vertikalum lenkstation 11 bewegt bzw. es wird der Abstand zur Vertikalumlenkstation 11 vergrößert. Das Linearantriebssystem 26 funktioniert nach dem Prinzip eines Garagenantriebs und umfasst eine Antriebsschiene 20, ein in der Antriebsschiene 20 angeordnetes Zugmittel, bei dem sich beispielsweise um einen Riemen, eine Kette oder generell um ein Umschlingungsmittel handeln kann. Ein Mitnehmer 27 ist mit dem Zugmittel verbunden, wobei das Zugmittel über einen Mitnehmerantrieb 28 bewegt wird. Der Mitnehmerantrieb 28 ist endseitig der Antriebsschiene 20 angeordnet. Wenn der Mitnehmerantrieb 28 angeschaltet wird, wird das Zugmittel bewegt und der mit dem Zugmittel verbundene Mitnehmer 27 in Längsrichtung der Antriebsschiene 20 verlagert. Er ist in der Antriebsschiene 20 gelagert und mit der Umlenkeinheit 16 verbunden. Zum Absenken des Ladesteckers 3 wird der Mitnehmer 27 des Linearantriebssystems 26 in Richtung zur Vertikalumlenkstation 11 linear verschoben. Die Umlenkeinheit 16 wird mitgeschleppt. Innerhalb der fünf Rollendurchführungen 23 wird das Ladekabel 2 anfangs durch Unterstützung der Feder 13 derart umgelenkt, dass sich die beiden Schenkel 8, 9 des Ladekabels 2 gleichmäßig verkürzen, wodurch Kabellänge frei wird, die am steckerseitigen Ende 7 zur Verfügung steht. Das Einfahren erfolgt durch Verlagerung des Mitnehmers 27 in die entgegengesetzte Richtung.

Die Tragplatte 17 der Umlenkeinheit 16 wird von Führungsschienen 18, 19 oberhalb der Schenkel 8, 9 geführt und getragen. Zwischen den beiden parallelen Führungsschienen 18, 19 für die Schenkel 8, 9 befindet sich zentral die Antriebsschiene 20 des Linearantriebssystems 26. Die Figur 4 zeigt, dass die Führungsschienen 18, 19 und die Antriebsschiene 20 über Horizontalstreben 21 miteinander verbunden sind. Über die Horizontalstreben 21, von denen mehrere in Längsrichtung der Führungsschienen 18, 19 verteilt angeordnet sind, und die quer zu den Führungsschienen 18, 19 verlaufen, entsteht eine Gitterrahmenstruktur oder leiterartige Struktur, die als solche unterhalb eines Horizontalträgers 22 angeordnet ist. Der Horizontalträger 22 ist in diesem Fall ein Doppel-T-Träger. Das Kabelführungssystem 1 befindet sich unterhalb dieses Doppel-T-Trägers. Der Doppel-T-Träger bzw. der Horizontalträger 22 kann beispielsweise Bestandteil einer Tragstruktur eines Gebäudes sein oder auch zur Anordnung des Kabelführungssystems montiert werden. Die Führungsschienen 18, 19 für die Schenkel 8, 9 befinden sich bevorzugt in gleichem horizontalen Abstand zum Horizontalträger, der im Bereich der Mittellängsachse des System angeordnet ist, so dass das Kabelführungssystem über einen Großteil seiner Länge im Gleichgewicht ist.

Anhand der schematischen Darstellungen wird deutlich, dass weder die Breite des Umlenkbereiches 10 noch die in Länge der Führungsschienen 18, 19 gemessene Längserstreckung des Kabelführungssystems 1 auf die dargestellten Proportionen zu begrenzen ist. Es können selbstverständlich durch längere Führungsschienen 18, 19 auch längere Ladekabel 2 geführt und gehalten werden, sofern dies erforderlich ist.

Exemplarisch befindet sich bei diesem Ausführungsbeispiel oberhalb des Horizontalträgers 22 lediglich die Versorgungsstation 6 (Figur 5). Dadurch steht unterhalb des Horizontalträgers 22 eine maximale Durchfahrtshöhe zu Verfügung, die nur im Bereich des nach unten orientierten Ladesteckers 3 begrenzt ist. Das erfindungsgemäße Kabelführungssystem 1 kann mithin von allen Seiten angefahren werden. Es ist nicht erforderlich, dass das Kabelführungssystem 1 parallel zur Parkrichtung der Elektrofahrzeuge angeordnet ist. Das Kabelführungssystem 1 kann auch quer zur Parkrichtung der Elektrofahrzeuge positioniert werden.

Das Ladekabel 2 kann so weit freigegeben werden, bis beide Schenkel 8, 9 maximal verkürzt worden sind, d.h. bis zu dem Punkt, an dem sich die Umlenkeinheit 16 nicht weiter verschieben lässt. Hierzu kann in einer oder es können in mehreren der Führungsschienen 18, 19 Begrenzer angeordnet sein, vorzugsweise sind Endschalter vorgesehen, die den Mitnehmerantrieb bei Erreichen von Endpositionen abschalten.

Anhand der Figuren ist zu erkennen, dass das Ladekabel 2 auch in der eingefahrenen Position stets horizontal verläuft und keine nach unten hängenden Schlaufen bildet. Die Schenkel 8, 9 des Ladekabels 2 sind stets im Wesentlichen parallel zu den Führungsschienen 18, 19 über ihnen angeordnet und auch parallel zueinander angeordnet.

Damit das Ladekabel 2 keine nach unten hängenden Schlaufen bildet, sind mehrere Kabelträger 24 unterhalb der Führungsschienen 18, 19 angeordnet. Die Kabelträger 24 sind in Längsrichtung der Führungsschienen 18, 19 verschiebbar. Sie besitzen in diesem Fall zudem Gleithülsen 25, durch welche das Ladekabel 2 geführt ist. Die Gleithülsen 25 besitzen eine gewisse Länge, so dass das Ladekabel 2 mit den Gleithülsen 25 nicht in Punkt- sondern in Linienberührung in Kontakt steht. Die Gleithülsen 25 können beispielsweise aus einem PTFE-Material bestehen oder eine entsprechende Beschichtung aufweisen, die einen geringen Reibkoeffizient mit dem Mantel des Ladekabels 2 hat. Beim Absenken des Ladesteckers 3 wird zunächst die Umlenkeinheit 16 motorisch in Längsrichtung der Führungsschienen 18, 19 und der Antriebsschiene 20 bewegt, bis die Umlenkeinheit 16 auf die ersten Kabelträger 24 stößt. Diese ersten Kabelträger 24 werden nun von der Umlenkeinheit 16 zusammengeschoben, bis sie auf die weiteren benachbarten Kabelträger 24 stoßen, bis schließlich die Endposition erreicht ist.

Beim Zurückfahren in die Ausgangsposition nehmen die Kabelträger 24 nacheinander ihre ursprüngliche Position wieder ein. Hierzu sind sie in nicht näher dargestellter Weise über Schleppelemente miteinander verbunden, so dass ein maximaler Abstand der Kabelträger 24 zueinander nicht überschritten werden kann. Im Ergebnis bleiben die Schenkel 8, 9 des Ladekabels 2 stets im Wesentlichen parallel zu den Führungsschienen 18, 19, ohne dass sich nach unten hängende Schlaufen bilden.

Die Figur 10 zeigt ein zweites Ausführungsbeispiel eines Kabelführungssystems 1a, bei welchem die Schenkel 8, 9 nicht horizontal nebeneinander, sondern vertikal übereinander angeordnet sind. Der Umlenkbereich 10 des Ladekabels 2 verläuft daher in einer Vertikalebene. Die Vertikalebene entspricht der Bildebene der Figur 10. Die Umlenkeinheit 16 ist ebenso vertikal orientiert. Die beiden Schenkel 8, 9 werden an Kabelträgern 24 getragen, die in nicht näher dargestellten Führungsschienen geführt werden. Das gesamte System befindet sich hängend unterhalb eines Horizontalträgers 22. Mehrere Vertikalstreben 29 tragen das Kabelführungssystem 1a über die nicht näher dargestellten Führungsschienen und die Antriebsschiene 20 mit dem Mitnehmerantrieb 28. Zur Funktionsweise wird auf die Erläuterungen der Figuren 1 bis 9 Bezug genommen.

### Bezugszeichen:

- 1 -: Kabelführungssystem
- 1a -: Kabelführungssystem
- 2 -: Ladekabel
- 3 -: Ladestecker
- 4 -: Führungseinrichtung
- 5 -: Anschlussende von 2
- 6 -: Versorgungsstation
- 7 -: Steckerseitige Ende von 2
- 8 -: Schenkel von 2
- 9 -: Schenkel von 2
- 10 -: Umlenkbereich von 2
- 11 -: Vertikalumlenkstation
- 12 -: Austrittsende von 11
- 13 -: Feder
- 14 -: Eintrittsende von 11
- 15 -: Rollendurchführung in 11
- 16 -: Umlenkeinheit
- 17 -: Tragplatte von 16
- 18 -: Führungsschiene für 8
- 19 -: Führungsschiene für 9
- 20 -: Antriebsschiene
- 21 -: Horizontalstrebe
- 22 -: Horizontalträger
- 23 -: Rollendurchführung von 16
- 24 -: Kabelträger
- 25 -: Gleithülsen
- 26 -: Linearantriebssystem
- 27 -: Mitnehmer
- 28 -: Mitnehmerantrieb
- 29 -: Vertikalstrebe
- P1 -: Pfeil = Bewegungsrichtung von 9

## Patentansprüche

1. Kabelführungssystem (1, 1a) zum Laden eines Elektrofahrzeugs umfassend ein Ladekabel (2) mit einem endseitigen Ladestecker (3), wobei das Ladekabel (2) in seinem Verlauf von einem Anschlussende zu seinem Ende mit dem Ladestecker (3) in einer Führungseinrichtung (4) U-förmig umgelenkt geführt wird, so dass das U-förmig verlaufende Ladekabel (2) zwei nebeneinander verlaufende Schenkel (8,9) aufweist, wobei das den Ladestecker (3) tragende Ende des Ladekabels (2) in einer ortsfesten Vertikalumlenkstation (11) nach unten umgelenkt wird, so dass der Ladestecker (3) hängend unterhalb der Vertikalumlenkstation (11) angeordnet ist, wobei die Führungseinrichtung (4) eine Umlenkeinheit (16) zur U-förmigen Umlenkung aufweist, die in eine Längsrichtung der Führungseinrichtung (4) verlagerbar ist und wobei das Ladekabel (2) von mehreren Kabelträgern (24) zwischen seinem Anschlussende (5) und der Umlenkeinheit (16) sowie zwischen der Umlenkeinheit (16) und der Vertikalumlenkstation (11) getragen und geführt wird.

2. Kabelführungssystem (1, 1a) nach Anspruch 1, **dadurch gekennzeichnet, dass** die Umlenkeinheit (16) mit einem Linearantriebssystem (26) verbunden ist, um die Umlenkeinheit (16) zum Absenken und zum Anheben des Ladesteckers (3) zu verlagern.

3. Kabelführungssystem (1, 1a) nach Anspruch 2, **dadurch gekennzeichnet, dass** das Linearantriebssystem (26) eine Antriebsschiene (20), einen in der Antriebsschiene (20) linear geführten Mitnehmer (27) und einen Mitnehmerantrieb (28) zum Verlagern des Mitnehmers (27) in der Antriebsschiene (20) aufweist, wobei der Mitnehmer (27) mit der Umlenkeinheit (16) verbunden ist.

4. Kabelführungssystem (1, 1a) nach einem der Ansprüche 1 bis 3, **dadurch gekennzeichnet, dass** die Führungseinrichtung (4) zwei parallel nebeneinander angeordnete Führungsschienen (18, 19) aufweist, in denen jeweils Kabelträger (24) geführt werden, um das Ladekabel (2) parallel zu den Führungsschienen (18,19) zu tragen und zu führen.

5. Kabelführungssystem (1, 1a) nach Anspruch 3 oder 4, **dadurch gekennzeichnet, dass** die Antriebsschiene (20) zwischen den Führungsschienen (18, 19) für die Schenkel (8, 9) des U-förmig umgelenkten Ladekabels (2) angeordnet ist.

6. Kabelführungssystem (1, 1a) nach einem der Ansprüche 1 bis 5, **dadurch gekennzeichnet, dass** die Umlenkeinheit (16) an den Führungsschienen (18,19) für die Schenkel (8,9) des U-förmig umgelenkten Ladekabels (2) gehalten und in Längsrichtung dieser Führungsschienen (18,19) verlagerbar ist.

7. Kabelführungssystem (1, 1a) nach einem der Ansprüche 1 bis 6, **dadurch gekennzeichnet, dass** die Umlenkeinheit (16) mehrere Rollendurchführungen (23) für das Ladekabel (2) aufweist, wobei die Rollendurchführungen (23) bogenförmig angeordnet sind.

8. Kabelführungssystem (1, 1a) nach einem der Ansprüche 1 bis 7, **dadurch gekennzeichnet, dass** die Vertikalumlenkstation (11) eine Rollendurchführung (15) zwischen ihrem horizontal offenen Eintrittsende (14) für das Ladekabel (2) und ihrem nach unten offenen Austrittsende (12) für das Ladekabel (2) aufweist.

9. Kabelführungssystem (1, 1a) nach Anspruch 8, **dadurch gekennzeichnet, dass** eine Feder (13) zwischen der Vertikalumlenkstation (11) und dem Ladestecker (3) angeordnet ist, um das Ladekabel (2) vorzuspannen, wenn der Ladestecker (3) angehoben wird, und um das Absenken des Ladesteckers (3) zu unterstützen.

10. Kabelführungssystem (1, 1a) nach einem der Ansprüche 1 bis 9, **dadurch gekennzeichnet, dass** die Kabelträger (24) Gleithülsen (25) oder Rollenfenster aufweisen, durch welche das Ladekabel (2) geführt ist.

11. Kabelführungssystem (1, 1a) nach einem der Ansprüche 1 bis 10, **dadurch gekennzeichnet, dass** die Schenkel (8, 9) des Ladekabels (2) stets im Wesentlichen parallel zu den Führungsschienen (18, 19) angeordnet und frei von nach unten hängenden Schlaufen sind.

12. Kabelführungssystem (1, 1a) nach einem der Ansprüche 1 bis 11, **dadurch gekennzeichnet, dass** die Kabelträger (24) zur Einstellung eines definierten Abstandes über Schleppelemente miteinander verbunden ist.
